# EUROPEAN PATENT APPLICATION

(11) **EP 0 534 612 A2**
(43) Date of publication of application: **31.03.1993**
(21) Application number: 92307712.7
(22) Date of filing: 24.08.1992
(51) Int. Cl.: H04Q 7/04, H04B 7/26

(54) **Cellular system sharing of logical channels**

(30) Priority: 28.08.1991 US 751045
(71) Applicant: MOTOROLA, INC., Schaumburg, IL 60196 (US)
(72) Inventor: Jeanes, Timothy M., Palatine, Illinois 60067 (US); Kang, Chol Su, Rolling Meadows, Illinois 60008 (US)
(74) Representative: Dunlop, Hugh Christopher

(57) **Abstract**

A method is offered of logically sharing communication resources among cells (51, 52 and 53) within a cellular system (50). The shared communication resources may be time slots in a TDM based system. The communication resources may be shared among a number of cells served by the same controller. The logical sharing of communication resources ensures that the shared resource is in proportion to the communication need.

## Description

### Field of the Invention

This invention relates to communication systems and more specifically to cellular communication systems.

### Background of the Invention

Cellular communication systems are known. Such systems are, typically, comprised of a number of remote base sites, each having a service coverage area (cell), and a number of cellular telephones (communication units). The service coverage areas of adjacent remote sites may be arranged to partially overlap in such a manner as to provide a substantially continuous coverage area in which a communication unit receiving service from one remote site may be handed off to an adjacent remote site with no interruption in service.

The Group Special Mobile (GSM) Pan-European cellular system, as specified in GSM recommendations available from the European Telecommunications Standards Institute (ETSI) and incorporated herein by reference, is an example of just such a system using such a format. Communication between a remote base site and a mobile communication unit typically occurs using a portion of a pair of frequencies (transmit and receive) temporarily assigned in support of a communication transaction at the remote site.

The pair of frequencies assigned for use at the remote site are typically referred to as a radio channel. Transmissions on the radio channel on a first frequency of the pair of frequencies from a remote site to a communication unit occur on a downlink. Transmissions on the radio channel on the second frequency of the pair of frequencies from a communication unit to a remote site occur on a uplink.

The GSM system is a TDM/TDMA system providing eight signal paths (8 TDM slots per TDM frame) on each frequency of the frequency pair. A single, primary radio channel assigned to a cell, by virtue of its being time multiplexed, can support up to seven users in addition to a multiplexed control channel within the eight TDM slots. Additional, secondary radio channels assigned to the same cell can provide a full complement of eight full rate speech users (in the 8 TDM slots) per radio channel, since the control channel within the first radio channel can control allocation of communication resources on secondary radio channels.

Transmissions (control or subscriber information) from a remote site to a communication unit, on the downlink, occupy a first TDM slot (downlink slot) on a first frequency of a radio channel and transmissions from a communication unit to a remote site, on the uplink, occupy a second TDM slot (uplink slot) on the second frequency of the radio channel. The uplink slot of a control channel and a subscriber channel is normally displaced three TDM positions behind the downlink slot on the first and second frequency of the radio channel.

Exchanges of control information (such as access requests and access grants) within GSM between communication units and remote base sites typically occurs on a control channel, commonly referred to as a broadcast control channel/common control channel (BCCH/CCCH), or simply as a control resource. Exchanges of subscriber traffic within GSM between a communication unit and remote base site occurs on a subscriber channel, referred to as a traffic channel (TCH). Channel set-up of the TCH typically occurs on a dedicated control channel (DCCH) or a stand alone dedicated control channel (SDCCH).

Within a communication system control of communication transactions involving communication units occurs through operation of remote base sites. Each remote base site asserts such control by transmitting, on the control resource, an identification signal to subscriber units identifying the presence of the remote base site and a location within the control resource within which to transmit resource requests.

Upon activation a communication unit is constructed to scan a set of communication resources (first TDM slot of radio channels used within the communication system) in search of identification signals transmitted on a control resource of a proximate remote base site. Upon detecting an identification signal the communication unit measures a signal quality factor (such as signal strength) of the identification signal as a means of determining proximity of the remote base site. Upon completing the scan the communication unit selects the closest remote base site (with the largest relative signal quality factor). Upon identifying, and locking onto a suitably strong signal (and registering if necessary) the communication unit monitors the selected control resource for incoming calls. Should the communication unit desire to initiate a call then an access request may be transmitted on the selected control resource.

Included within the identification signal transmitted on the control resource used by a base site are such things as timing information, an ID of the transmitting remote site, etc. The control resource comprises one (timeslot 0) of the eight TDM timeslots of a radio channel assigned to a remote site.

Under GSM a communication unit may request access to the communication system by transmitting a resource request to a proximate, remote base site on the control resource. In the alternative, another subscriber with the public switched telephone network (PSTN) may request access to the communication unit through a nearby base site. In either case, the remote base site responds by transmitting, on the control resource, a resource allocation to the communication unit identifying a TCH for use by the communication unit in exchanging a communicated signal through the remote base site.

In the case of an incoming call, or in the case of the communication unit initiating a call, the site controller may allocate a TCH, in support of the communication transaction, if a vacant communication resource exists at the base site. The allocated resource may be allocated from TDM timeslots one through seven on the same radio channel as the selected control resource or may be allocated from TDM timeslots zero through seven on any secondary radio channels assigned for use at the base site.

The control resource, under GSM, may be further divided into an uplink and downlink. The identification signal transmitted by base sites under GSM is transmitted on a broadcast control channel (BCCH) downlink. The uplink corresponding to the BCCH is the random access control channel (RACH). The RACH is used by communication units desiring access to the GSM system. A communication attains access to the GSM system by transmitting an access request on the RACH.

The GSM system upon receipt of the access request on the RACH, responds on the CCCH (control resource downlink) with a command that the communication unit move to a stand-alone dedicated control channel (SDCCH) for channel set-up. Upon completion of channel set-up on the SDCCH the GSM system transmits an identity of a TCH to be used by the communication unit in exchanging a communicated signal with a target, through the base site.

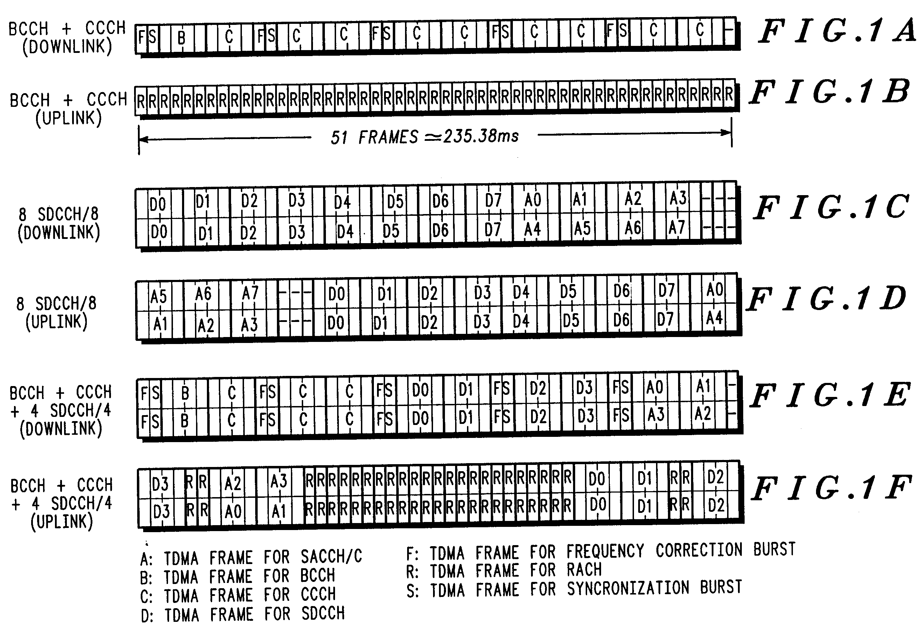

Timeslots zero through seven, within a TDM frame represent the physical channels of communication within GSM. Use of the physical channels within GSM, on the other hand, may be divided among a number of logical channels. Logical channels, within GSM, represent the logical sharing of physical channels over a specified, repeating series of frames (the multiframe). FIG. 1A and 1B depicts the use of slot 0 over 51 TDM frames (51-frame multiframe) and represents the shared use of the control resource (slot 0), within GSM by logical channels (BCCH and CCCH) over the 51-frame multiframe. Each small rectangle (FIG. 1) has a letter associated with the rectangle indicating (through reference to the footnotes) the information transmitted within slot 0 for any frame of a 51-frame multiframe.

As shown (FIG.1A) within the 51-frame multiframe the control resource uplink (slot 0) contains a frequency correction burst (frame 1) followed by a synchronization burst (frame 2). TDM frames 3 through 6 are used by the BCCH. The remainder of the multiframe is used by the CCCH interspersed with frequency correction bursts and synchronization bursts.

The control resource uplink (FIG. 1B) is reserved for use by the RACH. As describer earlier, the RACH is used by communication units to transmit access requests to the GSM system. As shown (FIG 1B) each slot within the 51-frame multiframe is potentially available to communication units for transmission of access requests.

Also previously described, the system responds on the CCCH on the control resource downlink (FIG. 1A) with control information identifying a SDCCH for channel set-up. As shown (FIG. 1A) the control information transmitted to a communication unit on the CCCH may occupy any one of four contiguous TDM frames at nine locations within the 51-frame multiframe.

The SDCCH (uplink and downlink) used for channel set-up may be assigned on a dedicated physical channel (slots 1, 2, 3, 4, 5, 6, or 7) or on the control resource depending on system capacity. Where occurring on a dedicated physical channel the SDCCH assigned to a communication unit may be any one of eight available channels. Where occurring on the control resource the SDCCH assigned to a communication unit may be any one of four available channels. Associated with each SDCCH is a slow associated control channel (SACCH). Where a communication unit is assigned a SDCCH for channel set-up, the exchange of set-up information occurs on the assigned SDCCH and associated SACCH (D0 and A0).

FIGs. 1C and 1D depicts eight SDCCH channels (D0 through d7) mapped onto a physical channel. Each depiction (FIG. 1C and 1D) shows two 51-frame multiframes. The two multiframes are necessary because two frames are necessary for the transmission of eight SACCHs. As shown in the top row of FIGs. 1C and 1D (the first 51-frame multiframe) the first four SACCHs (A0 to A3) are included in the first multiframe while the remaining SACCHs (A4 through A7) are transmitted in the second multiframe.

FIGs. 1E and 1F depict the control resource on which four SDCCHs have been mapped at the expense of control transmission capacity. The alternate mapping strategy (FIGs. 1E and 1F) is offered under GSM in the case of lightly loaded remote base sites where loading is light and sufficient capacity exists within a physical channel to support a full complement of control channels.

Channel sharing within cellular systems is known. Channel sharing, within GSM has also been suggested. A physical channel within GSM, on the other hand, represents significant capacity. A need exists for a way to share portions of physical channels under the GSM format without having to resort to the sharing of an entire physical channel.

### Summary of the Invention

In a cellular communication system wherein communicated signals are exchanged between base sites and communication units on logical channels, a method of sharing logical channels among cells is offered. The method includes the steps of detecting a need for a shared logical channel at a requesting cell by a controller, and exclusively allocating the shared logical channel to the requesting cell by the controller.

### Brief Description of the Drawing

FIG. 1 depicts a prior art 51-frame multiframe for exchanging control information between mobile subscribers and base stations.

FIG. 2 is a block diagram of a communication system under the invention.

FIG. 3 depicts a three service coverage areas under the invention.

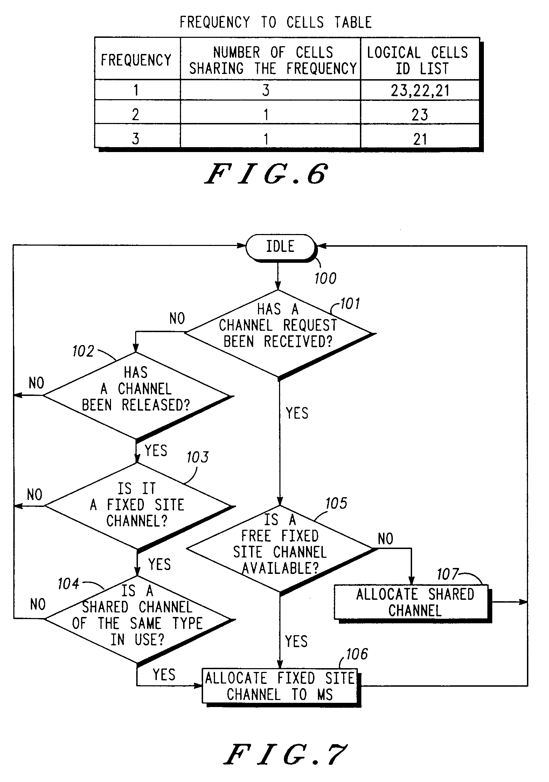

FIG. 4 depicts a prior art TDM frame.

FIG. 5 depicts prior art concatenated message blocks within the same slot of successive TDM frames.

FIG. 6 depicts a frequency to cells table under the invention.

FIG. 7 shows a flow chart of shared channel allocation under the invention.

FIG. 8 depicts a resource control block and in-use list stored within memory of the BSS under the invention.

FIG. 9 depicts a logical antenna switching device under the invention.

FIG. 10 comprises a base station system within an antenna switch controller under the invention.

### Brief Description of a Preferred Embodiment

The solution to the problem of resource sharing within a system wherein less than a physical channel is needed lies, conceptually, in a method of subdividing the physical channel into corresponding logical channels and sharing logical channels among cells within the system. The shared logical channels may be allocated to a requesting cell as needed for an assigned task and de-allocated upon completion of the task. Upon allocation of the logical channel to the requesting cell, the logical channel is unavailable for use by other cells until the assigned task is complete. Since a logical channel is a repeating structure within a GSM multiframe, allocation of a logical channel allows the remainder of the physical channel to be used for other purposes consistent with the structure of the multiframe.

In one embodiment of the invention, allocation of shared logical channels is under the control of the cell resource manager (CRM). The CRM is a software routine operating within a controller of the base station system (BSS). The CRM provides a means for detecting a need for a shared logical channel at a requesting cell. The CRM controls the exclusive allocation of individual shared resources to BTSs based upon resource requests and the logical state of a set of control parameters contained within a table (BTS table) maintained for each BTS. Some of the parameters are entered upon start-up of the system, other parameters are modified during normal BTS operation.

Shown in FIG.7 is a flow chart of the allocation of shared resources under the invention. Reference will be made to the flow chart (FIG. 7) as necessary to the understanding of the invention.

One set of control parameters used by the CRM in the allocation of shared logical channels is the frequency to cells table (FCT) contained within a memory (not shown) of the BSS. The FCT provides a means for identifying cells among which to share logical channels. Contained within the FCT is an ID of a frequency and corresponding IDs of cells sharing logical channels on the frequency.

Another set of parameters are found within an in-use list containing a number of dedicated channel blocks (DCBs). A DCB contains information describing logical channels. The in-use list contains, at any instant of time, a list identifying logical channels then in use by the BTS.

Another set of parameters are found within a table of resource control blocks (RCBs). The table of RCBs is created by the CRM upon initialization of the BSS and is used to maintain pools of DCBs describing free channels in each timeslot, free channels per channel type, free channels fixed to a cell, shared free channels, blocked channels, etc.

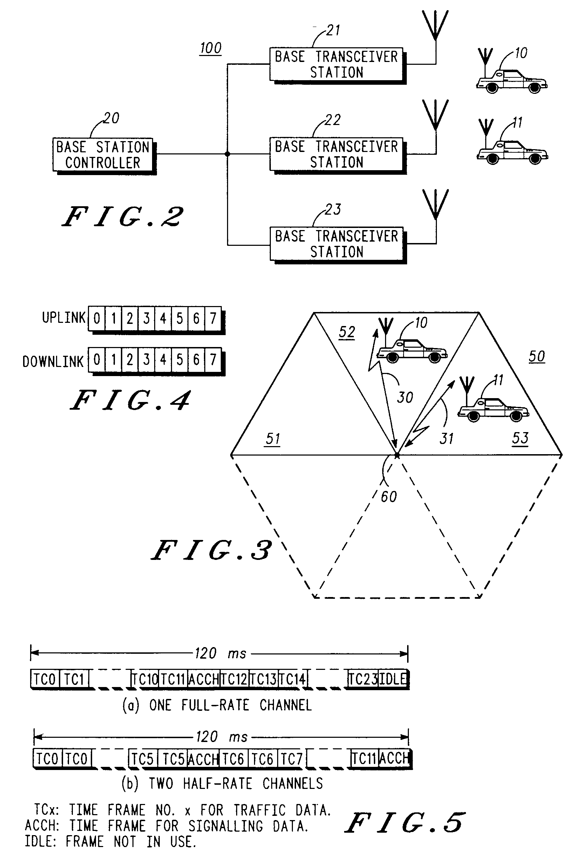

Shown in FIG. 2 is a BSS generally (100) in accordance with the invention. Included within such a BSS (100) is a base site controller (BSC) (20) and base transceiver stations (BTSs) (21, 22, and 23). Also shown (FIG. 2) are mobile stations (MSs) (10 and 11) (as used herein "mobile station" refers to mobile units or portable units). The BSS (100) and MSs (10 and 11) are constructed to exchange signal information within a signal format substantially as specified under GSM.

The BSS (100), in conjunction with a mobile switching center (not shown), provides communication services throughout a relatively large geographic area (50, FIG. 3) through BTSs (21, 22, and 23) centrally located within the geographic area (50). Each BTS (21, 22 or 23) may offer communication services within a respective service coverage area (51, 52 and 53) on a single primary frequency through a 60° sectored antenna covering a portion of the large geographic area (50). Communication services offered within the relatively small geographic areas (50, 51 and 52) are provided through BTSs (21, 22 and 23) located at a base site (60) centrally located within the large geographic area (50).

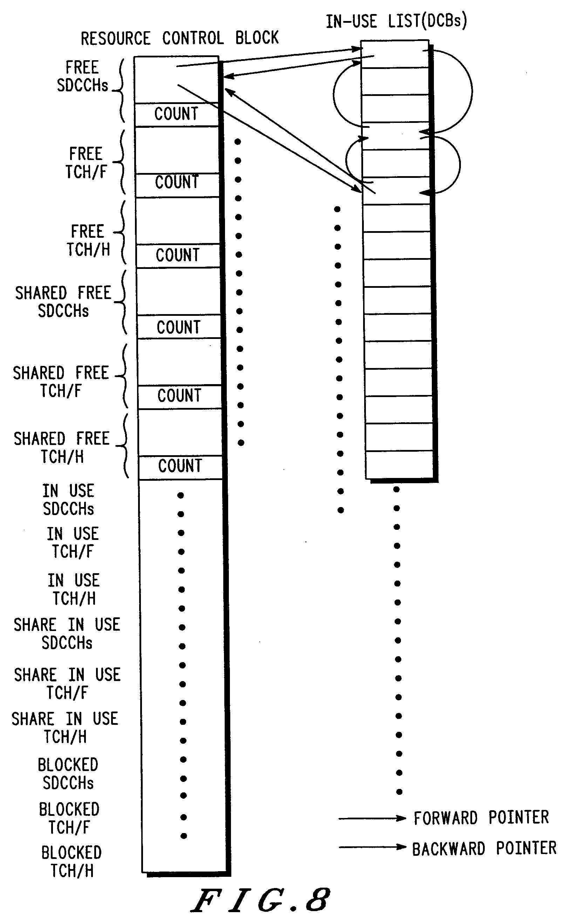

Shown in FIG. 6 is a simplified FCT for the large geographic area (50). As shown frequency 1 is shared within service coverage areas 51, 52 and 53 by BTSs 21, 22 and 23.

Upon activation an MS (11, FIG. 3) is constructed to scan a frequency spectrum for a broadcast control channel (BCCH) of a proximate BTS (23). Upon detecting a BCCH the MS (11) performs a signal quality measurement. (The signal quality measurement may be signal strength or measurement of a bit error rate.) Upon completion of the scan the MS (11) selects the BTS (23) with the largest relative signal quality factor as the serving site.

Upon desiring to make a call, MS (11), located in service coverage area 53, transmits an access request (31) on the RACH (R, FIG. 1B) of the serving BTS (23). The BTS (23) forwards such request to the BSC (20) for validation and resource allocation. The BSC (20) in conjunction with a channel allocation routine within the CRM provides a means for receiving a resource request from an identified BTS (23) of a number of BTSs (21, 22, or 23) and allocating a shared logical channel in response to the received resource request.

Upon receiving a request (101), the channel allocation routine within the CRM first, through a means for classifying the type of resource request, classifies the resource request. Classification of the resource request may include determining that the resource request is for a control resource (e.g. a set-up channel) or a subscriber communication resource (e.g. a traffic channel). The channel allocation routine upon completion of classification, searches (105) for a channel of the requested type from the list of free channels fixed to the requesting cell.

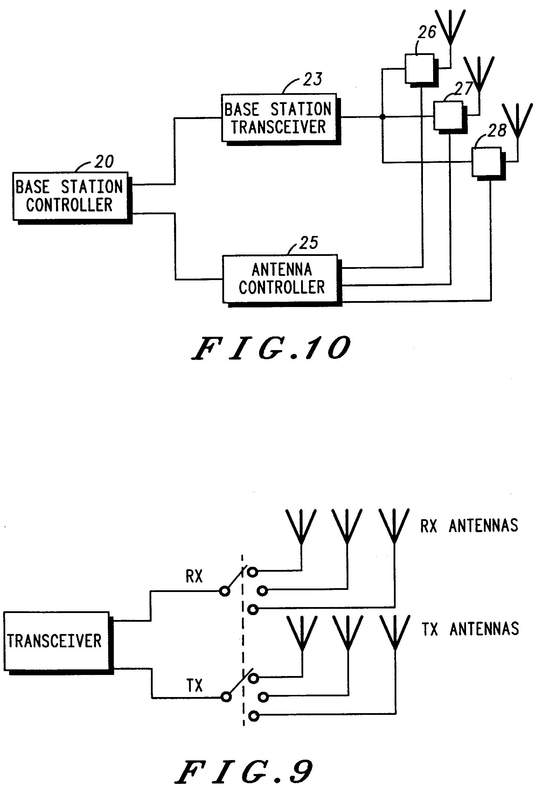

The access request (31) is classified by the CRM as a request for a set-up channel. By reference to the FCT (FIG. 6) the channel allocation routine determines that frequency 2 is fixed to the BTS (23). By reference to the FCT and in-use list (FIG. 8) the channel allocation routine identifies a SDCCH (for example frequency 2, slot 1, channel D0, FIG. 1C and 1D) for channel set-up.

During channel set-up on the SDCCH the CRM determines the type of communication resource requested (for example a half-rate TCH). By reference to the FCT (FIG. 6) the channel allocation routine determines that a slot on frequency 2 (for example slot 3) (106) is available in support of a communication transaction.

Alternatively, the traffic channels on frequency 2 may have been fully occupied. In such a case, during setup on the assigned SDCCH (frequency 2, slot 1, channel D0), the channel allocation routine will search for a channel within the shared free list. In doing so the channel allocation routine would identify frequency 1, through reference to the FCT, as a shared channel available for use by the requesting MS (11). By allocating fixed channels first and shared channels last, the possibility of blocking within other cells, where shared channels may be the only available resource, is minimized.

The channel allocation routine searches for a TCH in support of the communication transaction on frequency 1. The channel allocation routine may determine that a slot on shared frequency 1 (for example slot 2) is available in support of a communication transaction. Upon identification of the shared resource (frequency 1, slot 2) for allocation (107) to the requesting MS (11), use of the identified shared resource must be blocked in any sharing BTS (21 and 22). The channel allocation routine blocks use of the shared channel by entering the DCB of the shared half-rate traffic channel as blocked in the RCB of the sharing BTSs (21 and 22).

When a shared channel is selected, the DCB of the channel is moved from the shared free list (table of RCBs) to the in-use list within the BTS tables of the requesting cell. In order to avoid contention the DCB of the selected shared free channel is moved to the blocked table within the BTS tables of other sharing BTSs.

If sufficient transceiver capacity exists at the requesting BTS (23) then a transceiver may be allocated in support of the communication transaction on shared frequency 1. In such a case the allocated transceiver is limited to transmissions on the allocated shared resource (shared frequency 1, slot 2 in alternating frames for the half-rate TCH). Transmissions from the allocated transceiver must be limited to the allocated, shared logical channel to allow use of the balance of shared frequency 1 through BTS 22.

If sufficient transceiver capacity does not exist at the requesting BTS (23) then equipment sharing may be used in support of the communication transaction with the requesting MS (11). Equipment sharing under the invention allows a shared transceiver associated with BTS 22 or 23 to transmit a signal on a shared logical channel in the service coverage area (53) of the requesting BTS (23) through use of a means for antenna switching.

A schematic of a means for antenna switching is shown in FIG. 9. Under the invention antenna switching allows a transceiver under the control of BTS 22 to support a communication transaction in an adjoining service coverage area (53). Antenna switching under the invention occurs between TDM slots and allows a message within a single slot (slot 2, frequency 1) to be transmitted from any of the three BTS (60° sectored) antennas located at base site 60. Antenna switching, according to the invention, occurs by operation of BTS 22 under the control of signal transmitted from the BSC (20).

During normal operation of BTS 22 (no shared logical channels) the antenna selected by BTS 22 serves service coverage area 52. During the incidence of shared logical channels alternate antennas, servicing service coverage areas 51, 52 or 53 may be selected in support of shared logical channels.

While the ganged switch (FIG. 9) illustrates diagrammatically the operation of antenna switching the result achieved under the invention occurs somewhat differently. Under the invention, switching of the receive antenna is accomplished through the use of a receive matrix switch. The receive matrix switch is directly analogous to operation of the ganged switch.

Transmitter switching is achieved somewhat differently. The transmitter switching is accomplished by connecting several frequency selective networks (cavity combiners) tuned to different frequencies to the transmitter output and routing the cavity outputs to different antenna. The transmit path can be switched (on a time slot basis) to a particular antenna by tuning the transmit frequency to the tuned frequency of the cavity connecting the desired antenna. This effectively directs the transmit power to the desired antenna.

Signal routing to a desired antenna from a shared transceiver can, in another embodiment of the invention, be accomplished by a separate antenna switch (25, FIG. 10) associated with each BTS (22) having shared logical channels. In such a case antenna switches (26, 27, or 28) may be independently blocked and unblocked based upon information transferred from the BSC (20) to the antenna switch (25). Information transferred may include a DCB of a shared channel and an ID of a destination antenna.

If, after allocation of the shared channel to the requesting MS (11), a request is received from another MS (10) the process may be continued. In this case a resource request is received by BTS 22 from MS (10) in service coverage area (52). As above the channel allocation routine searches for free fixed channels associated with the requesting BTS (22). By reference to the FCT the channel allocation routine determines that the BTS (22) doesn't have any fixed channels. In such a case the channel allocation routine would identify frequency 1, through reference to the FCT, as a shared channel for use by the requesting MS (10).

By reference to the FCT and the in-use list (FIG. 8) the channel allocation routine determines that frequency 1 is available in support of a communication transaction. If the resource request (30) from the MS (10) is for another half-rate traffic channel then the shared resource assigned to the MS (10) may be the alternate-half of the half-rate traffic channel already assigned to MS 11 through BTS 23 in service coverage area 53.

In the previous example MS (11) was assigned a shared frequency (1) because the fixed site frequency (2) was fully occupied. If the fixed site frequency (2) were to become less than fully occupied then the shared resource, according to the invention, would be de-allocated. The release of another fixed channel (frequency 2) (102) is detected by a means for detecting the end of a communicated signal. In such a case the channel allocation routine, through a means for de-allocating the fixed resource (such as the CRM), de-allocates the fixed resource.

In general when a channel is released, the DCB of the resource is removed from the in-use list of the releasing cell. The DCB of the resource is also removed from the blocked channel list of sharing cells (if any). The DCB is moved back to the shared free list of all sharing BTSs (if any).

In specific, when a fixed channel is released (103), the CRM determines whether any shared channels of the same type are then in use (104) through the releasing cell. If so, then the mobile (MS 11) on the shared channel is handed over (106) to the fixed channel. If the handover is successful then the DCB of the shared channel is placed back within the shared free list and the shared channel is unblocked from other, sharing cells.

In the above example the shared logical channel was a half-rate traffic channel. It should be apparent that other logical channels may be shared within the system without departing from the spirit of the invention.

## Claims

1. In a cellular communication system wherein communicated signals are exchanged between base sites and communication units on logical channels, a device for sharing logical channels among cells, such device comprising: A) means for detecting a need for a shared logical channel at a requesting cell by a controller, and B) means for exclusively allocating the shared logical channel to a requesting cell by a controller.

2. The device as in claim 1 wherein the means for exclusively allocating a shared logical channel further includes means for identifying a plurality of cells among which to share the logical channel.

3. The device as in claim 2 further including means for receiving a resource request from an identified cell of the plurality of cells and allocating the shared logical channel in response to the received resource request.

4. The device as in claim 3 wherein the means for receiving the resource request further includes means for classifying the type of resource request.

5. The device as in claim 4 further including means for classifying the resource request as a request for a control resource and allocating a control resource.

6. The device as in claim 4 further including means for classifying the resource request as a request for a communication resource and allocating a communication resource.

7. The device as in claim 1 further including means for exchanging a communicated signal between a base site and a communication unit on the allocated, shared communication resource.

8. The device as in claim 7 further including means for detecting the end of the communicated signal.

9. The device as in claim 8 further including means for de-allocating the shared resource upon detecting the end of the communicated signal.

10. In a cellular communication system wherein communicated signals are exchanged between base sites and communication units on logical channels, a method of sharing logical channels among cells, such method including the steps of: A) detecting a need for a shared logical channel at a requesting cell by a controller, and B) exclusively allocating the shared logical channel to the requesting cell by the controller.
